# EUROPEAN PATENT APPLICATION

(11) **EP 3 174 337 A1**
(43) Date of publication of application: **31.05.2017**
(21) Application number: 16204408.5
(22) Date of filing: 18.09.2014
(51) Int. Cl.: H04W 36/00

(54) **BASE STATION TO ACCESS POINT INTERFACE FOR DATA BEARER ROUTING**

(30) Priority: 18.10.2013 US 201361892971 P; 17.09.2014 US 201414489122
(62) Divisional of application: 14781993.2
(71) Applicant: Qualcomm Inc., San Diego, CA 92121-1714 (US)
(72) Inventor: OZTURK, Ozcan, San Diego, CA, 92121-1714 (US); HORN, Gavin Bernard, San Diego, CA, 92121-1714 (US); JAIN, Vikas, San Diego, CA, 92121-1714 (US); WADHWA, Deepak, San Diego, CA, 92121-1714 (US)
(74) Representative: Wegner, Hans

(57) **Abstract**

handing over or associating to a base station (BS) of a first radio access technology (RAT) while being served by a BS of a second RAT are disclosed. An Xw interface that is used to control offloading and routing of data bearers between base stations of disparate RATs is disclosed. Call flows illustrating the use of the Xw interface and apparatus using the Xw interface are also disclosed.

## Description

### CROSS-REFERENCE TO RELATED APPLICATIONS

The present Application for Patent claims priority to U.S. Provisional Application No. 61/892,971, filed October 18, 2013, and U.S. Patent Application Serial No. 14/489,122, filed September 17, 2014, both of which are expressly incorporated by reference herein in their entirety.

### BACKGROUND

### Field of the Disclosure

Certain aspects of the present disclosure generally relate to wireless communications and, more particularly, to techniques for routing data bearers of a user equipment (UE) while the UE is handing over or associating to a base station (BS) of a first radio access technology (RAT) while being served by a BS of a second RAT.

### Description of the Related Art

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include Code Division Multiple Access (CDMA) systems, Time Division Multiple Access (TDMA) systems, Frequency Division Multiple Access (FDMA) systems, 3^{rd} Generation Partnership Project (3GPP) Long Term Evolution (LTE) systems, Long Term Evolution Advanced (LTE-A) systems, and Orthogonal Frequency Division Multiple Access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-input single-output, multiple-input single-output or a multiple-input multiple-output (MIMO) system.

As wireless communication technology advances, a growing number of different radio access technologies are being utilized. For instance, many geographic areas are now served by multiple wireless communication systems, each of which can utilize one or more different air interface technologies. In order to increase versatility of wireless terminals in such a network environment, there recently has been an increasing trend toward multi-mode wireless terminals that are able to operate under multiple radio technologies. For example, a multi-mode implementation can enable a terminal to select a system from among multiple systems in a geographic area, each of which may utilize different radio interface technologies, and subsequently communicate with one or more chosen systems.

In some cases, such a system may allow traffic to be offloaded from one network, such as a wireless wide area network (WWAN) to a second network, such as a wireless local area network (WLAN).

### SUMMARY

Certain aspects of the present disclosure provide a method for wireless communications performed by a base station (BS) of a first radio access technology (RAT). The method generally includes identifying a plurality of data bearers configured for a user equipment (UE) served by a first base station of a second RAT, receiving from the UE a measurement report identifying a second base station of the second RAT, identifying one or more of the data bearers to offload to the second base station of the second RAT based on the measurement report, communicating with the first and second base stations of the second RAT to offload the identified data bearers to the second base station of the second RAT, and configuring the UE to use the second base station of the second RAT for transmitting and receiving the identified bearers.

Certain aspects of the present disclosure provide a method for wireless communications performed by a base station (BS) of a first radio access technology (RAT). The method generally includes receiving from a user equipment (UE), a measurement report identifying a target base station of the first RAT, determining the UE is interworking with a base station of a second RAT, sending a handover request to the target base station, the handover request including information identifying the base station of the second RAT and at least one data bearer configured for the UE served by the base station of the second RAT, configuring the UE to handover to the target base station while keeping interworking with the base station of the second RAT, forwarding data for the identified at least one data bearer to the target base station until the handover is complete, and sending an indication to the target base station that the base station is ending forwarding data for the identified at least one data bearer to the target base station.

Certain aspects of the present disclosure provide a method for wireless communications performed by a base station (BS) of a first radio access technology (RAT). The method generally includes receiving a handover request from a source base station of the first RAT to handover a user equipment (UE), the handover request including information identifying a base station of a second RAT and at least one data bearer configured for the UE served by the base station of the second RAT, receiving data for the identified at least one data bearer from the source base station until the handover is complete, and sending a request to offload the at least one identified data bearer to the base station of the second RAT.

Certain aspects of the present disclosure provide an apparatus for wireless communications of a first radio access technology (RAT). The apparatus generally includes a processor configured to identify a plurality of data bearers configured for a user equipment (UE) served by a first base station of a second RAT, receive from the UE a measurement report identifying a second base station of the second RAT, identify one or more of the data bearers to offload to the second base station of the second RAT based on the measurement report, communicate with the first and second base stations of the second RAT to offload the identified data bearers to the second base station of the second RAT, and configure the UE to use the second base station of the second RAT for transmitting and receiving the identified bearers, and a memory coupled with the processor.

Certain aspects of the present disclosure provide an apparatus for wireless communications of a first radio access technology (RAT). The apparatus generally includes a processor configured to receive, from a user equipment (UE), a measurement report identifying a target base station of the first RAT, determine the UE is interworking with a base station of a second RAT, send a handover request to the target base station, the handover request including information identifying the base station of the second RAT and at least one data bearer configured for the UE served by the base station of the second RAT, configure the UE to handover to the target base station while keeping interworking with the base station of the second RAT, forward data for the identified at least one data bearer to the target base station until the handover is complete, and send an indication to the target base station that the base station is ending forwarding data for the identified at least one data bearer to the target base station, and a memory coupled with the processor.

Certain aspects of the present disclosure provide an apparatus for wireless communications of a first radio access technology (RAT). The apparatus generally includes a processor configured to receive a handover request from a source base station of the first RAT to handover a user equipment (UE), the handover request including information identifying a base station of a second RAT and at least one data bearer configured for the UE served by the base station of the second RAT, receive data for the identified at least one data bearer from the source base station until the handover is complete, and send a request to offload the at least one identified data bearer to the base station of the second RAT, and a memory coupled with the processor.

Various aspects and features of the disclosure are described in further detail below.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate certain typical aspects of this disclosure and are therefore not to be considered limiting of its scope, for the description may admit to other equally effective aspects.
FIG. 1 illustrates an example multiple access wireless communication system in accordance with certain aspects of the present disclosure.
FIG. 2 illustrates a block diagram of an access point and a user terminal in accordance with certain aspects of the present disclosure.
FIG. 3 illustrates various components that may be utilized in a wireless device in accordance with certain aspects of the present disclosure.
FIG. 4 illustrates an example multi-mode mobile station, in accordance with certain aspects of the present disclosure.
FIG. 5 illustrates a reference cellular-WLAN interworking architectures for a wireless local area network (WLAN) and a 3GPP eNodeB, in accordance with certain aspects of the present disclosure.
FIG. 6 illustrates an exemplary interface protocol architecture for the control plane, in accordance with certain aspects of the present disclosure.
FIG. 7 illustrates an exemplary interface protocol architecture for the user plane, in accordance with certain aspects of the present disclosure.
FIG. 8 illustrates an exemplary call flow for the Initial Bearer Offload procedure, in accordance with certain aspects of the present disclosure.
FIG. 9 illustrates an exemplary call flow for the Modify Bearer Offload procedure, in accordance with certain aspects of the present disclosure.
FIG. 10 illustrates an exemplary call flow for Wi-Fi handover, in accordance with certain aspects of the present disclosure.
FIG. 11 illustrates an exemplary call flow for LTE handover, in accordance with certain aspects of the present disclosure.
FIG. 12 sets forth example operations for switching data bearers configured for a UE, in accordance with certain aspects of the present disclosure.
FIG. 13 sets forth example operations for handing over a UE with data bearers served by a base station of another radio access technology (RAT), in accordance with certain aspects of the present disclosure.
FIG. 14 sets forth example operations for handing over a UE with data bearers served by a base station of another radio access technology (RAT), in accordance with certain aspects of the present disclosure.

### DETAILED DESCRIPTION

As demand for wireless services increases, network operators may desire to offload user device traffic from a cellular network to a wireless local area network (WLAN), for example, a Wi-Fi WLAN, to reduce congestion on the cellular network, and because operator deployed WLANs are often under-utilized. However, the experience of users is suboptimal when a UE connects to an overloaded WLAN. According to aspects of the present disclosure, network operators may control which traffic is routed over WLAN and which traffic is kept on the WWAN (e.g., 3GPP RAN). For example, some data flows (e.g., related to VoIP or other operators' services) can be served on WWAN to leverage its QoS capabilities, while data flows related to "best-effort" Internet traffic can be offloaded to WLAN. According to certain aspects of the present disclosure, an interface for controlling interfacing methods and apparatus are provided to enable network operators to control which network traffic is routed over WLAN (e.g., a Wi-Fi WLAN) and which traffic is kept on the WWAN. For controlling offloading between LTE and Wi-Fi, an interface called Xw is disclosed.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method that is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### An Example Wireless Communication System

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), CDMA2000, etc. UTRA includes Wideband-CDMA (W-CDMA) and Low Chip Rate (LCR). CDMA2000 covers IS-2000, IS-95, and IS-856 standards. A TDMA network may implement a radio technology such as Global System for Mobile Communications (GSM). An OFDMA network may implement a radio technology such as Evolved UTRA (E-UTRA), IEEE Std 802.11, IEEE Std 802.16, IEEE Std 802.20, Flash-OFDM®, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS, and LTE are described in documents from an organization named "3rd Generation Partnership Project" (3GPP). CDMA2000 is described in documents from an organization named "3rd Generation Partnership Project 2" (3GPP2).

Single carrier frequency division multiple access (SC-FDMA) is a transmission technique that utilizes single carrier modulation at a transmitter side and frequency domain equalization at a receiver side. The SC-FDMA has similar performance and essentially the same overall complexity as those of OFDMA system. However, SC-FDMA signal has lower peak-to-average power ratio (PAPR) because of its inherent single carrier structure. The SC-FDMA has drawn great attention, especially in the uplink communications where lower PAPR greatly benefits the mobile terminal in terms of transmit power efficiency. It is currently a working assumption for uplink multiple access scheme in the 3GPP LTE and the Evolved UTRA.

An access point ("AP") may comprise, be implemented as, or known as NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as an access terminal, a subscriber station, a subscriber unit, a mobile station, a remote station, a remote terminal, a user terminal, a user agent, a user device, user equipment, a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

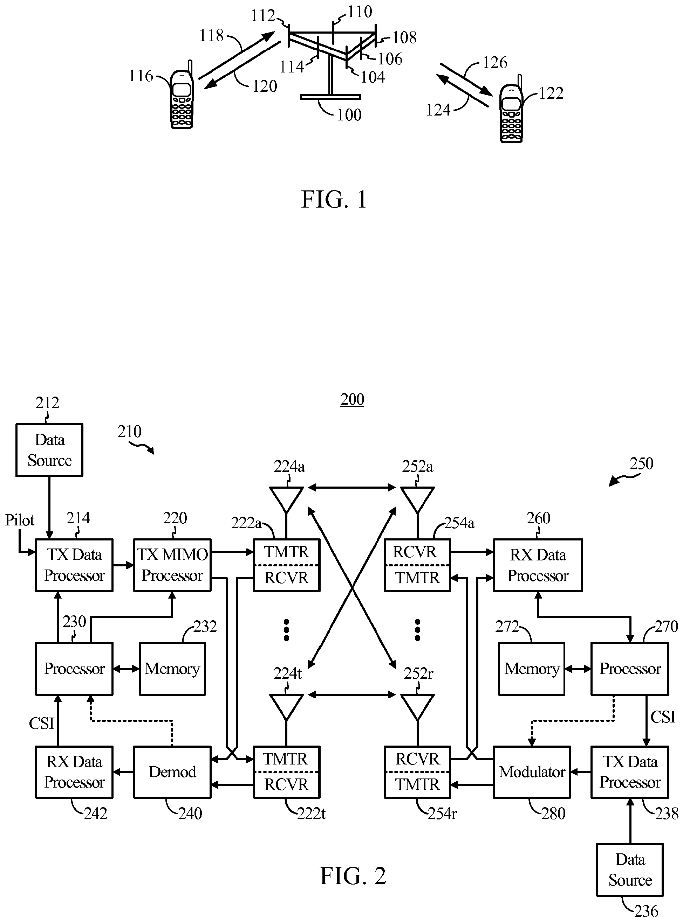

Referring to FIG. 1, a multiple access wireless communication system according to one aspect is illustrated in which procedures described for reducing the time to begin acquisition of wireless networks may be performed. An access point 100 (AP) may include multiple antenna groups, one group including antennas 104 and 106, another group including antennas 108 and 110, and an additional group including antennas 112 and 114. In FIG. 1, two antennas are shown for each antenna group, however, more or fewer antennas may be utilized for each antenna group. Access terminal 116 (AT) may be in communication with antennas 112 and 114, where antennas 112 and 114 transmit information to access terminal 116 over forward link 120 and receive information from access terminal 116 over reverse link 118. Access terminal 122 may be in communication with antennas 106 and 108, where antennas 106 and 108 transmit information to access terminal 122 over forward link 126 and receive information from access terminal 122 over reverse link 124. In a FDD system, communication links 118, 120, 124, and 126 may use different frequency for communication. For example, forward link 120 may use a different frequency then that used by reverse link 118.

Each group of antennas and/or the area in which they are designed to communicate is often referred to as a sector of the access point. In one aspect of the present disclosure, each antenna group may be designed to communicate to access terminals in a sector of the areas covered by access point 100.

In communication over forward links 120 and 126, the transmitting antennas of access point 100 may utilize beamforming in order to improve the signal-to-noise ratio of forward links for the different access terminals 116 and 122. Also, an access point using beamforming to transmit to access terminals scattered randomly through its coverage causes less interference to access terminals in neighboring cells than an access point transmitting through a single antenna to all its access terminals.

FIG. 2 illustrates a block diagram of an aspect of a transmitter system 210 (also known as the access point) and a receiver system 250 (also known as the access terminal) in a multiple-input multiple-output (MIMO) system 200. At the transmitter system 210, traffic data for a number of data streams is provided from a data source 212 to a transmit (TX) data processor 214.

In one aspect of the present disclosure, each data stream may be transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 230. Memory 232 may store data and software for the transmitter system 210.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain aspects of the present disclosure, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals may be received by *N_{R}* antennas 252a through 252r and the received signal from each antenna 252 may be provided to a respective receiver (RCVR) 254a through 254r. Each receiver 254 may condition (e.g., filters, amplifies, and downconverts) a respective received signal, digitize the conditioned signal to provide samples, and further process the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 may be complementary to that performed by TX MIMO processor 220 and TX data processor 214 at transmitter system 210.

A processor 270 periodically determines which pre-coding matrix to use. Processor 270 formulates a reverse link message comprising a matrix index portion and a rank value portion. Memory 272 may store data and software for the receiver system 250. The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights, and then processes the extracted message.

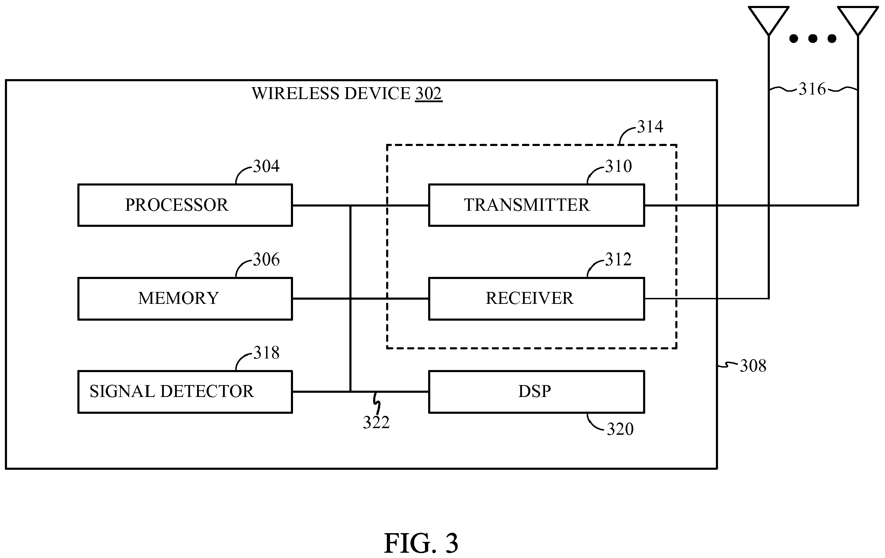

FIG. 3 illustrates various components that may be utilized in a wireless device 302 that may be employed within the wireless communication system illustrated in FIG. 1. The wireless device 302 is an example of a device that may be configured to implement the various methods described herein. The wireless device 302 may be a base station 100 or any of user terminals 116 and 122.

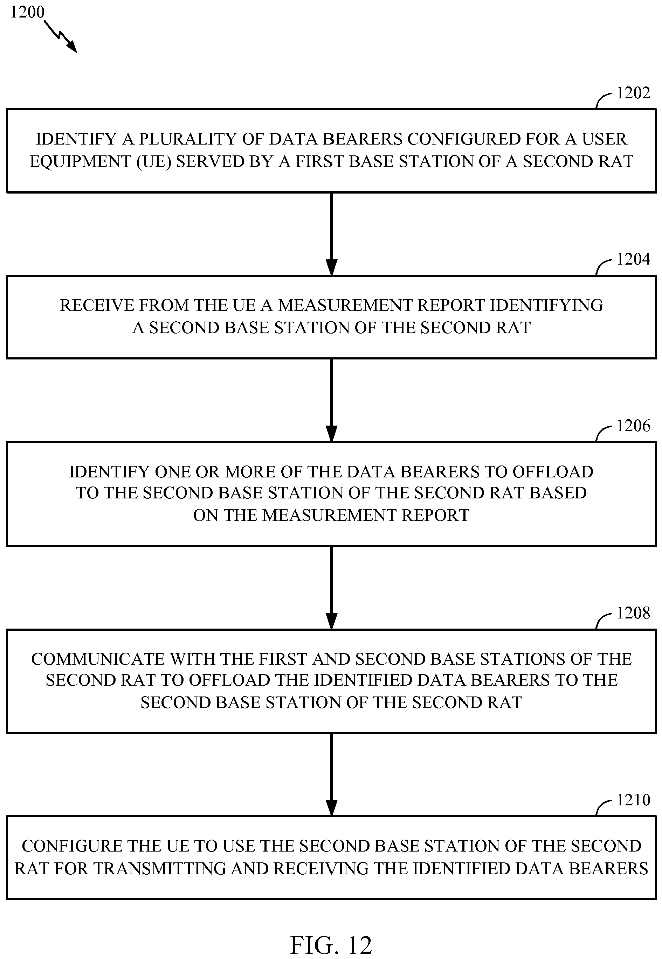

The wireless device 302 may include a processor 304 that controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The processor 304 may direct the operation of wireless device 302 in performing the methods described herein and set forth in FIGS. 12-14. The instructions in the memory 306 may be executable to implement the methods described herein and set forth in FIGS. 12-14.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single transmit antenna 316 or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

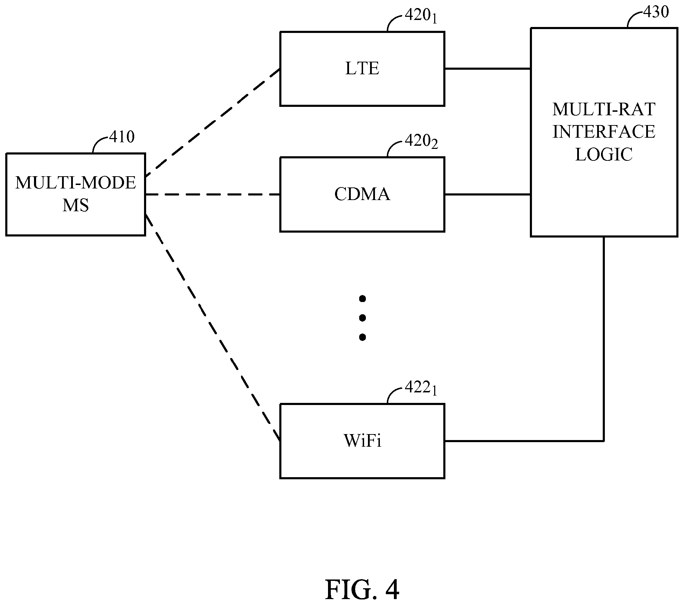

In order to expand the services available to subscribers, some mobile stations (MS) support communications with multiple radio access technologies (RATs). For example, as illustrated in FIG. 4, a multi-mode MS 410 may support LTE for broadband data services and code division multiple access (CDMA) for voice services. Illustratively, LTE is shown as a first RAT 420₁, CDMA is shown as a second RAT 420₂, and Wi-Fi is shown as a third RAT 422₁.

In certain applications, multi-RAT interface logic 430 may be used to exchange information between both long-range and short-range RATs. This may enable a network provider to control how (through which RAT) an end user of the multi-mode MS 410 actually connects to the network. The interface logic 430 may, for example, support local IP connectivity or IP connectivity to a core network.

For example, a network provider may be able to direct the multi-mode MS to connect to the network via short-range RAT, when available. This capability may allow a network provider to route traffic in a manner that eases congestion of particular air resources. In effect, the network provider may use short-range RATs to distribute some air traffic (of a long-range RAT) into a wireline network or to distribute some air traffic from a congested wireless network to a less congested wireless network. The traffic may be re-routed from the short-range RAT when conditions mandate, such as when a mobile user increases speed to a certain level not suitable for a short-range RAT.

Further, since long-range RATs are typically designed to provide service over several kilometers, the power consumption of transmissions from a multi-mode MS when using a long-range RAT is non-trivial. In contrast, short-range RATs (e.g., Wi-Fi) are designed to provide service over several hundred meters. Accordingly, utilizing a short-range RAT, when available, may result in less power consumption by the multi-mode MS 410 and, consequently, longer battery life.

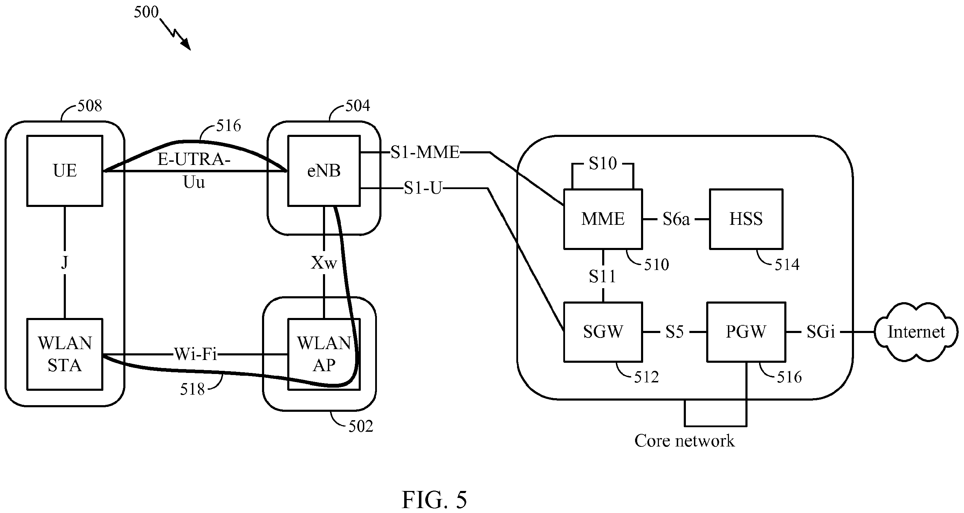

FIG. 5 illustrates a reference cellular-WLAN interworking architecture 500 for a wireless local area network (WLAN) access point (AP) 502, a 3GPP eNodeB 504, a core network 506, and a UE 508, wherein aspects of the present disclosure may be utilized. The architecture is one embodiment of interworking functionality between 3GPP and WLAN systems. This permits use of a WLAN access service by 3GPP subscribers. The UE in FIG. 5 has a single WLAN interface (e.g., a transceiver capable of WLAN communications).

As illustrated in FIG. 5, a UE may be served by an eNB or other BS via a wide-area wireless (e.g., LTE, UTRAN, GERAN, etc.) network, and by a WLAN AP or other BS via a local-area wireless (e.g., Wi-Fi) network. While FIG. 5 shows an eNB, the BS of the wide-area network may be a UTRAN NodeB, an E-UTRAN eNodeB, an access point, or any other radio node supporting a wide-area wireless network. Similarly, the BS of the local-area network may be a low-power E-UTRAN eNodeB such as a femto node, a WLAN AP, or any other radio node supporting a local-area wireless network. The UE 508 may communicate with the BS of the wide-area network (e.g., an eNB) via an E-UTRA-Uu interface, and with the BS of the local-area network (e.g., a WLAN AP) via Wi-Fi. In communicating with the BS of the wide-area network 504, the UE may establish one or more connections 516 over the E-UTRA-Uu interface. Likewise, in communicating with the BS of the local-area network 502, the UE may establish one or more connections 518.

According to certain aspects, the BS of the wide-area network may communicate with a mobility management entity (MME) 510 in the core network via an S1-MME interface, and with a serving gateway (SGW) 512 via an S1-U interface. The BS of the local-area network may communicate with an evolved packet data gateway (ePDG) or trusted wireless access gateway (TWAG) in the core network via S2a and/or S2b interfaces. The MME may communicate with a home subscriber server (HSS) 514 via an S6a interface, and with the serving gateway via an S11 interface. The SGW may communicate with a packet gateway (PGW) 516 via an S5 interface. The PGW may communicate with Internet entities via an SGi interface.

According to certain aspects of the present disclosure, the BS of the wide-area network 504 may communicate with the BS of the local-area network 502 via an Xw interface, as described herein.

According to certain aspects, with RAN aggregation a user may be simultaneously connected to an LTE eNB and a WLAN AP (e.g., a Wi-Fi AP), which provide radio access links to transport a user's signaling and data traffic, as shown in FIG. 5. The eNB and the AP may be logically collocated or non-collocated. A user's data or signaling bearers may be served by either LTE or Wi-Fi radio links. A data bearer establishes a "virtual" connection between two endpoints so that traffic can be sent between them. It acts as a pipeline between the two endpoints.

A UE may become aware of WLAN APs by performing scanning procedures as specified in IEEE Std 802.11, which generally includes passive scanning and active scanning. Passive scanning, as defined in IEEE Std 802.11, may be inefficient for the UE, as it waits, with receiver on, for the reception of a WLAN beacon. As the beacon transmission interval is approximately a hundred milliseconds, passive scanning for WLAN beacons on dozens of possible WLAN channels may result in high scan energy and high scan latency. Active scanning may be faster, but adds traffic to the WLAN, namely probe requests and probe responses. Active scanning is also power intensive.

IEEE Std 802.11u has defined additional mechanisms for a UE to discover further information about an AP without being associated with the AP. For example, a generic advertisement service (GAS) may provide a transport of an advertisement protocol's frames between the UE and a server in the network. The AP may be responsible for the relay of a mobile device's query to a server in the carrier's network and for delivering the server's response back to the mobile. An example of another mechanism includes access network query protocol (ANQP), which is generally a query advertisement protocol for access network information retrieval by the UE/STA from the AP which is transported over the generic advertisement service (GAS), including a Hotspot operator's domain name, roaming partners accessible via the Hotspot along with their credential type and EAP method supported for authentication, IP address type availability, and other metadata useful in the UE's network selection process.

A UE may not have to associate with a WLAN AP in order to provide measurements. The UE may support a subset of additional procedures as defined in IEEE Std 802.11k, IEEE Std 802.11u and Hotspot 2.0. With regards to a radio access network (RAN), there may be no interface between the AP and the eNodeB, as illustrated in FIG. 5. Even though this is expected to operate for operator controlled WLAN APs, no loading or neighbor information is expected to be exchanged over the backhaul. However, in the case of a collocated AP and eNodeB, IEEE Std 802.11k, IEEE Std 802.11u, and Hotspot 2.0 information on the AP may be known in the eNodeB (e.g., via a backhaul link) and the UE may not have to perform ANQP to acquire the information. When efficient passive scanning is enabled, the AP may transmit its beacons at the time advertised by the RAN. In other words, the AP may acquire cellular timing and SFN, and may know beacon transmission times advertised by the RAN. For certain aspects, two levels of reporting may be used to identify the AP: identifying the AP (e.g., based on BSSID), i.e., from beacon only, and providing IEEE Std 802.11k, IEEE Std 802.11u, or Hotspot 2.0 identifying information using ANQP (e.g., in the case of a non-collocated AP and eNB). For certain aspects, it is possible to have a backhaul interface to exchange this information (not shown in the figure).

### Base Station to Access Point Interface for Bearer Routing

In general, offloading traffic from a cellular network to a WLAN may be desirable, because operator deployed WLAN networks are often under-utilized. However, user experience is suboptimal when a UE connects to an overloaded WLAN. Aspects of the present disclosure may be utilized by mobile operators to control which traffic is routed over WLAN and which traffic is kept on the WWAN (e.g., 3GPP RAN). For example, some data flows (e.g., related to VoIP or other operators' services) can be served on WWAN to leverage its QoS capabilities, while data flows related to "best-effort" Internet traffic can be offloaded to WLAN.

According to certain aspects, a user may be simultaneously connected to an LTE eNB and a Wi-Fi AP, which provide radio access links to transport a user's signaling and data traffic, as shown in FIG. 5. The eNB and the AP may be logically non-collocated, e.g., the eNB and AP are controlled by separate controller entities that may cooperate with each other. In some cases, the eNB and the AP may be logically collocated, e.g., the eNB and AP are controlled by the same entity, such as a control processor.

Data or signaling bearers of a UE, such as the UE illustrated in FIG. 5, may be served by either LTE or Wi-Fi radio links. A data bearer establishes a "virtual" connection between two endpoints so that traffic can be sent between them. It acts as a "pipeline" between the two endpoints. According to certain aspects of the present disclosure, methods are described for enabling and controlling the interworking and data bearer offloading between LTE and Wi-Fi on a direct link between the eNB and the AP, referred to as an Xw interface. With interworking, the performance of each of the available links may be autonomously evaluated (e.g., by a network controller) on a real-time basis, without any user intervention, and the "best possible" link for each data bearer may be selected. The performance evaluation may look at a multitude of parameters from an end-to-end perspective. Some of the parameters considered for the decision may include signal and channel quality, available bandwidth, latency, and operator policies regarding which applications and services are allowed to be moved to Wi-Fi and which are restricted to 3GPP RAN.

For purposes of clarity, the below disclosure is described with regard to a UE with logically collocated LTE and WLAN STA functions (e.g., an LTE mobile phone with Wi-Fi capability, wherein the LTE and Wi-Fi interfaces are controlled by a single controller/processor), but the disclosure is not limited to UEs with logically collocated LTE and WLAN STA functions.

According to certain aspects, an interface, referred to as Xw, may be implemented between eNBs and WLAN APs. The Xw interface comprises a user plane (Xw-U) and a control plane (Xw-C). Xw-U may be used to forward data packets between an eNB and a WLAN AP, where each packet belongs to a data bearer. Xw-C may be used to transmit control messages between an eNB and a WLAN AP for interface selection decisions for data bearers, for mobility, and for exchanging resource and performance information. When an AP is an LTE eNB, X2 interface may be used (*e.g*., for communicating data packets and control messages) instead of the Xw interface.

According to certain aspects, the Xw-C control plane can be implemented between an eNB and an AP without the Xw-U user plane being implemented between the eNB and the AP, e.g., where an AP is connected directly to a core network. User data to be transported to or from a UE via the AP could be received directly from the core network or transmitted directly to the core network via the direct connection, and there may be no need for the Xw-U plane.

According to certain aspects, when an Xw-U user plane is implemented between an eNB and a WLAN AP, the eNB functions as an anchor point for RAN bearers and forwards packets for these bearers to and from the WLAN AP. In other words, all of the data for the offloaded bearers transits via the eNB, either from a UE via the AP to the eNB and sent on to the core network, or from the core network to the eNB, sent on to the AP, and delivered to the UE by the AP.

Access to PDN services and associated applications in a wireless network may be provided to a UE by EPS bearers. A default bearer for the UE is typically established during attachment of the UE to the PDN. The default bearer for the UE may be maintained throughout the lifetime of the connection between the UE and PDN. This may be referred to as always-on IP connectivity. Because of access to services by the UE or service requests, additional dedicated bearers can be dynamically established. A dedicated bearer may be used if the end-user has connectivity to a different Packet Data Network (PDN) than that provided by the default bearer, or if the end-user uses a different Quality of Service (QoS) than that offered by the default bearer. Dedicated bearers are configured to run in parallel to the existing default bearer.

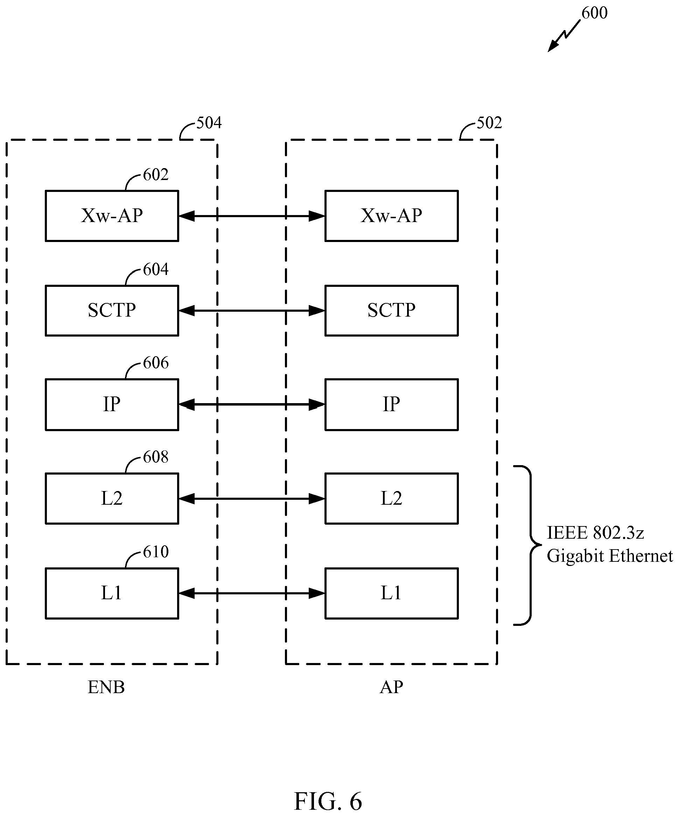

FIG. 6 illustrates an exemplary Xw interface protocol architecture 600 for the control plane that may be used to manage the offload configuration between a WLAN AP 502 and an eNB 504. As illustrated, the Xw application protocol (Xw-AP) layer 602 is implemented atop a stream control transmission protocol (SCTP) layer 604, which is a protocol built on an internet protocol (IP) layer 606. IP is built on top of a layer 2 protocol (L2) layer 608, which is built on the layer 1 (L1) or hardware layer 610.

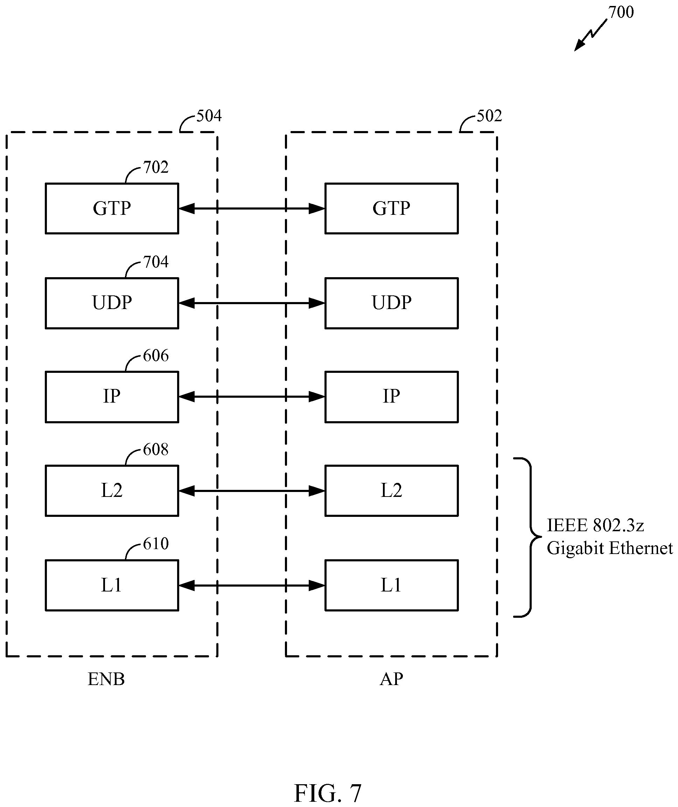

FIG. 7 illustrates an exemplary Xw interface protocol architecture 700 for the user plane that may be used to manage the offload configuration between a WLAN AP 502 and an eNB 504. As illustrated, the general packet radio service (GPRS) tunneling protocol (GTP) layer 702 is implemented atop a user datagram protocol (UDP) layer 704, which is a protocol built on an internet protocol (IP) layer 606. IP is built on top of a layer 2 protocol (L2) layer 608, which is built on the layer 1 (L1) or hardware layer 610.

According to certain aspects, the following two procedures over the Xw interface may be used for data offloading and handover: the INITIAL BEARER OFFLOAD procedure and the MODIFY BEARER OFFLOAD procedure. The INITIAL BEARER OFFLOAD procedure may be used to begin offloading of a bearer currently being served via a WWAN base station (e.g., an eNB) to a WLAN base station (e.g., a Wi-Fi AP). The MODIFY BEARER OFFLOAD procedure may be used to request adding or deleting data bearers to the data bearers for a UE offloaded from a WWAN base station to a WLAN base station (e.g., the UE was previously associated with an INITIAL BEARER OFFLOAD procedure).

According to certain aspects, the INITIAL BEARER OFFLOAD procedure may be used by an eNB to request offloading of bearers for a UE to an AP for the first time after the UE associates with the AP, as described herein.

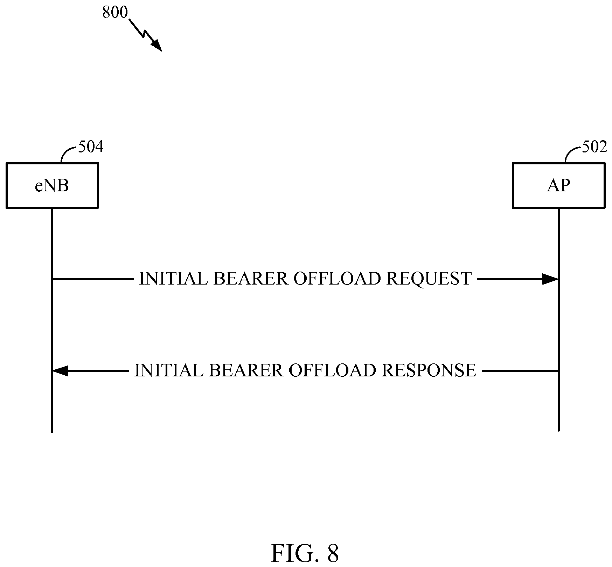

FIG. 8 illustrates an exemplary call flow 800 for the INITIAL BEARER OFFLOAD procedure. As illustrated, the eNB 504 sends an INITIAL BEARER OFFLOAD REQUEST message to an AP 502 with information regarding a UE and a list of the UE's bearers requested to be offloaded. The AP then, in response to INITIAL BEARER OFFLOAD REQUEST message from the eNB, sends an INITIAL BEARER OFFLOAD RESPONSE message to the eNB with a list of admitted bearers. According to certain aspects, the AP may admit a list of data bearers that does not include all of the bearers listed in the INITIAL BEARER OFFLOAD REQUEST message due to, for example, an admission policy of the AP. For example, an eNB may request to offload a data bearer for an email application and a data bearer for a social networking application in an INITIAL BEARER OFFLOAD REQUEST message to an AP, and the AP may admit the data bearer for the email application and not admit the data bearer for the social networking application due to an admission policy of the AP. In the example, the AP would include the data bearer for the email application in the INITIAL BEARER OFFLOAD RESPONSE, but not the data bearer for the social networking application.

According to certain aspects, the MODIFY BEARER OFFLOAD procedure may be used by an eNB to request adding or deleting data bearers to the data bearers for a UE offloaded to an AP, as described herein.

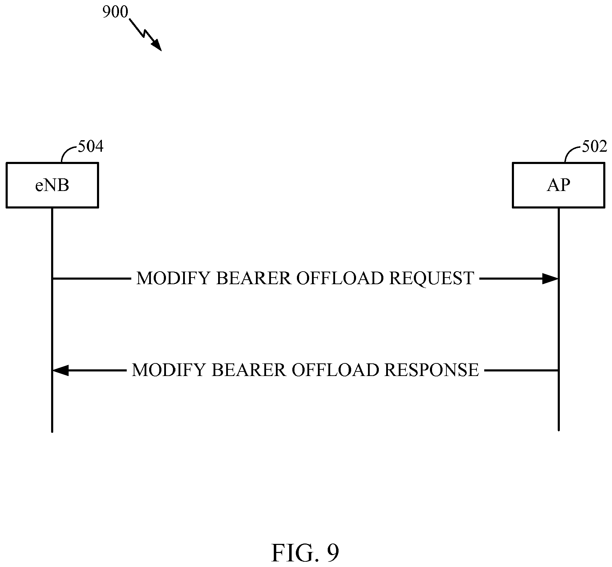

FIG. 9 illustrates an exemplary call flow 900 for the MODIFY BEARER OFFLOAD procedure. As illustrated, the eNB 504 sends a MODIFY BEARER OFFLOAD REQUEST message to an AP 502 including an identifier of a UE and a list of bearers requested to be modified. The AP may then, in response to the MODIFY BEARER OFFLOAD REQUEST message from the eNB, sends a MODIFY BEARER OFFLOAD RESPONSE message to the eNB with a new list of admitted bearers. According to certain aspects, the AP may not reject a removal of a bearer from the previous offload list. For example, an eNB may request to stop offloading a data bearer for an email application and start offloading of a data bearer for a social networking application in a MODIFY BEARER OFFLOAD REQUEST message to an AP. In the example, the AP stops offloading of the data bearer for the email application, and the AP may reject the request to start offloading for the data bearer for the social networking application, depending on admission policies of the AP. Also in the example, the AP would not include the data bearer for the email application in the INITIAL BEARER OFFLOAD RESPONSE message, but if the AP did not reject the admission of the data bearer for the social networking application, then the INITIAL BEARER OFFLOAD RESPONSE message would include the data bearer for the social networking application,.

For purposes of clarity, LTE handover and WLAN handover procedures are treated as independent and decoupled in this disclosure, but the disclosed methods and apparatuses are not so limited. For example, the INITIAL BEARER OFFLOAD procedure and MODIFY BEARER OFFLOAD procedure may be used in a network wherein an LTE handover triggers the network to begin a WLAN handover.

According to certain aspects, the LTE mobility procedure may be unchanged from previous standards (e.g., Rel-8), except for new Wi-Fi related information in the X2 messages as described below. Wi-Fi mobility may be UE driven; i.e. the UE may autonomously associate and disassociate with APs and report these association changes to a serving eNB, which may make data traffic routing decisions based on the association changes. For example, a UE served by an eNB may have a data bearer offloaded to a first AP when the UE moves, dissociates from the first AP, and associates to a second AP. In the example, the UE reports the dissociation from the first AP and the association to the second AP, and the eNB uses the MODIFY BEARER OFFLOAD procedure with the first AP to stop offloading of bearers with the first AP and the INITIAL BEARER OFFLOAD procedure to begin offloading of bearers with the second AP.

According to certain aspects, a UE may make autonomous decisions for association with an AP and report the association to a serving eNB in an Association Report. The Association Report may include measurements for the AP. For example, a UE may include signal strength measurements for a newly associated AP in an Association Report to the UE's serving eNB. According to certain aspects, an eNB may make decisions for offloading a UE's data bearers to an AP based on UE measurement reports regarding the AP. In the example, the UE may report that it is receiving a relatively high signal strength from the AP, and the eNB may determine to offload data bearers for the UE to the AP based on the reported signal strength.

According to certain aspects, an eNB may request offloading to an AP over the Xw interface and, after getting a positive response, the eNB may configure the UE, via RRC signaling, to offload some or all of the UE's data bearers. For example, an eNB may send an INITIAL BEARER OFFLOAD REQUEST message to an AP requesting offloading of a default bearer of a UE to the AP. In the example, the INITIAL BEARER OFFLOAD REQUEST message includes an identifier of the UE and an identifier of the default bearer. Also in the example, the AP may determine that it will admit the UE's default bearer, and send an INITIAL BEARER OFFLOAD RESPONSE message to the eNB indicating that the AP will admit the UE's default bearer. Still in the example, the eNB will then send RRC signaling to the UE to offload the UE's default bearer to the AP.

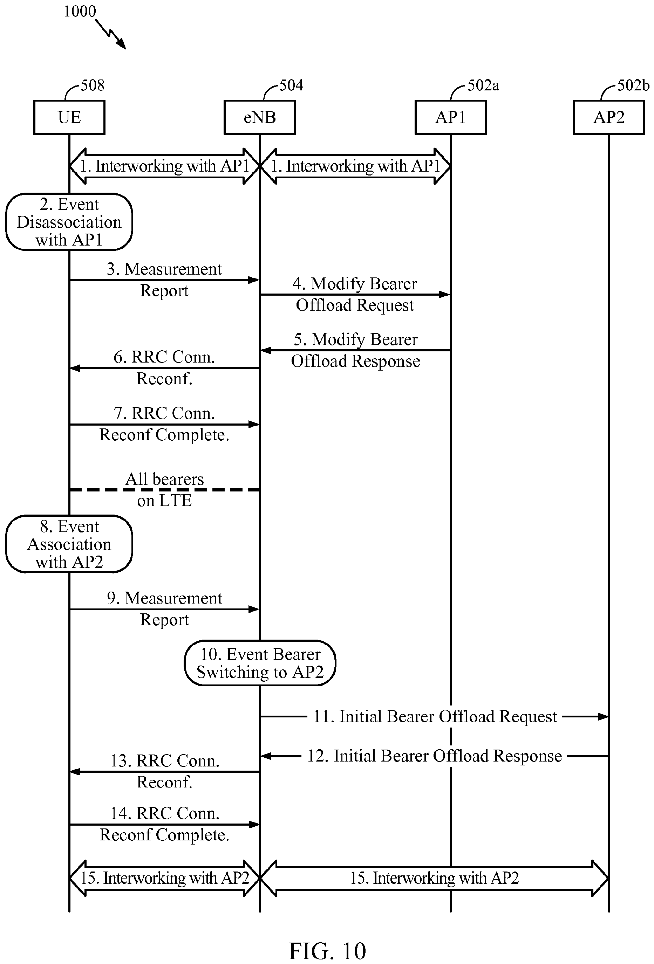

FIG. 10 illustrates an exemplary call flow 1000 for Wi-Fi handover of a UE 508 from AP1 502a to AP2 502b. Items 1-7 illustrate dissociation from AP1 and stopping of bearer offloading to AP1. Items 8-15 illustrate association with AP2 and starting of bearer offloading to AP2. Items 8-15 also correspond to a procedure for initial association to AP2 and starting of bearer offloading to AP2 by the UE.

Referring to the call flow in FIG. 10, at 1, the UE 508 is being served by the eNB 504 and is associated with AP1 502a, with at least one bearer offloaded to AP1. At 2, the UE dissociates from AP1 due to mobility of the UE, for example. At 3, the UE sends an Association Report to the eNB, reporting measurements of AP1 by the UE that indicate that the UE will not be able to continue to associate with AP1. The measurement reports may indicate that signal strength received from AP1 has fallen below a threshold, for example. At 4, the eNB sends a MODIFY BEARER OFFLOAD REQUEST message to AP1, as described above with respect to FIG. 9. The MODIFY BEARER OFFLOAD REQUEST message directs AP1 to stop serving all bearers of the UE. At 5, AP1 sends a MODIFY BEARER OFFLOAD RESPONSE message, as described above with respect to FIG. 9, to the eNB in response to the MODIFY BEARER OFFLOAD REQUEST message the eNB sent at 4. The MODIFY BEARER OFFLOAD RESPONSE message indicates that AP1 is no longer serving any bearers of the UE. At 6, the eNB sends an RRC Connection Reconfiguration message to the UE that indicates to the UE that all of the UE's bearers will be served by the eNB. At 7, the UE sends an RRC Connection Reconfiguration Complete message to the eNB, indicating that the UE has completed the RRC reconfiguration requested by the eNB at 6.

Still referring to the call flow in FIG. 10, at 8, the UE 508 associates with AP2 502b. At 9, the UE sends an Association Report to the eNB 504, reporting measurements of AP2 by the UE indicating the quality of the connection between the UE and AP2. At 10, the eNB determines to begin offloading of bearers to AP2. At 11, the eNB sends an INITIAL BEARER OFFLOAD REQUEST message to AP2, as described above with respect to FIG. 8. The INITIAL BEARER OFFLOAD REQUEST message identifies the UE and the bearers of the UE that AP2 is requested to serve. At 12, AP2 sends an INITIAL BEARER OFFLOAD RESPONSE message to the eNB, as described above with respect to FIG. 8. The INITIAL BEARER OFFLOAD RESPONSE message indicates which bearers AP2 has admitted and will begin serving. At 13, the eNB sends an RRC Connection Reconfiguration message to the UE that indicates to the UE the list of bearers that AP2 has admitted and will serve. At 14, the UE sends an RRC Connection Reconfiguration Complete message to the eNB, indicating that the UE has completed the RRC reconfiguration requested by the eNB at 13. At 15, the UE is being served by the eNB and by AP2, with at least one bearer being served by AP2.

The exemplary call flow 1000 in FIG. 10 illustrates the call flow for the case when AP1 502a and AP2 502b are logically non-collocated with the eNB 504. In the case when AP1 is logically collocated with the eNB, steps 4 and 5 are not used. That is, the single controller of the logically collocated eNB and AP1 reroutes the data bearers without using the Xw messages shown in steps 4 and 5. In the case when AP2 is logically collocated with the eNB, steps 11 and 12 are not used. That is, the single controller of the logically collocated eNB and AP2 reroutes the data bearers without using the Xw messages shown in steps 11 and 12.

According to certain aspects, for an eNB to eNB handover of a UE that is participating in interworking with an eNB and an AP, the source eNB may communicate with the target eNB over an X2 interface following standard (e.g., Rel-8) LTE handover procedures. However, the following differences from a standard LTE handover are disclosed:

| **Standard eNB to eNB handover** | **Disclosed eNB to eNB with interworking handover** |
|---|---|
| 1. The source eNB sends a HANDOVER REQUEST message to the target eNB with information about the UE. | 1. The source eNB may send information regarding an interworking AP (SSID, etc.) and a list of offloaded bearers in a HANDOVER REQUEST message to the target eNB. |
| 2. The source eNB forwards packets for all data bearers of the UE to the target eNB. | 2. The source eNB may forward packets for data bearers on LTE (and not offloaded to the AP) to the target eNB while the source eNB may continue to forward packets for offloaded data bearers to the AP. |
| 3. The target eNB indicates to the information regarding the target eNB in the RRC Reconfiguration message. | 3. The target eNB may indicate the same set of offloaded bearers in the RRC Reconfiguration message sent to the UE in the handover (HO) command. |
| 4. The target eNB serves the UE's bearers after the handover is complete. | 4. The target eNB may send a PATH SWITCH REQUEST to the core network after configuring offloading with the AP. |

According to certain aspects, the configured traffic offloading at an AP may be kept until the LTE handover is complete, i.e., the configuration of data bearers at the AP may not change during the LTE handover. The UE may still transmit to the Wi-Fi AP on the data bearers configured by the source eNB, and the Wi-Fi AP may transmit the traffic for this UE received from the source eNB.

According to certain aspects, after the handover is successful (e.g., HO Complete message is received by the target eNB), the target eNB may configure offloading with the AP based on the information obtained from the source eNB. If the target eNB keeps the same set of offloaded data bearers at the AP, no new RRC configuration may be needed for the UE. If the target eNB changes the offloaded data bearers during the INITIAL BEARER OFFLOAD procedure with the AP, the target eNB may send a RRC reconfiguration message to the UE.

According to certain aspects, the source eNB may keep forwarding traffic for offloaded data bearers to the AP until the source eNB receives an indication that S1-U bearers for the offloaded traffic have been switched to the target eNB. The source eNB may then stop forwarding packets to both the target eNB and the AP.

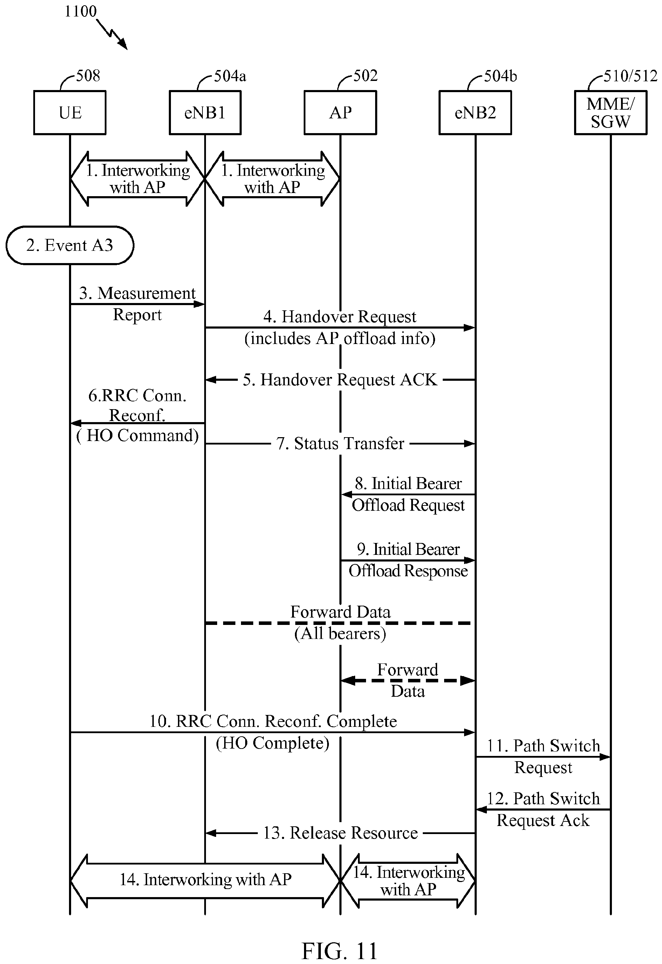

FIG. 11 illustrates an exemplary call flow 1100 for LTE handover wherein the UE 508 moves from coverage of eNB1 504a to eNB2 504b while still connected to an AP 502. At 1, the UE is being served by eNB1 and is associated with an AP, with at least one bearer offloaded to the AP. At 2, the UE detects that the connection to eNB1 is in a bad condition (e.g., due to weak signal strength or interference) and the UE should begin measuring signals of other cells. This is referred to as an event A3 occurrence. At 3, the UE sends a measurement report to eNB1 indicating that eNB2 is a suitable cell to which the UE can handover. At 4, eNB1 sends a HANDOVER REQUEST message to eNB2, requesting that eNB1 handover the UE to eNB2. As described above, the HANDOVER REQUEST message includes an identifier of the AP and a list of bearers offloaded to the AP. At 5, eNB2 sends a HANDOVER REQUEST ACKNOWLEDGMENT (ACK) message, indicating that eNB2 will accept the handover of the UE. The HANDOVER REQUEST ACK includes a transparent container for RRC configuration for the offloaded bearers. At 6, eNB1 sends an RRC connection reconfiguration message including a handover (HO) command to the UE, indicating the UE should handover to eNB2. At 7, eNB1 sends a status transfer message for all bearers of the UE, including the bearers offloaded to the AP, to eNB2. Also at 7, eNB1 starts forwarding packets transferred via LTE bearers to eNB2. eNB1 continues to forward packets transferred via offloaded bearers to the AP. At 8, eNB2 sends an INITIAL BEARER OFFLOAD REQUEST message to the AP, as described above with respect to FIG. 8. At 9, the AP sends an INITIAL BEARER OFFLOAD RESPONSE message to eNB2, as described above with respect to FIG. 8. At 10, the UE sends an RRC connection reconfiguration complete message to eNB2, indicating that the UE has completed a handover from eNB1 to eNB2. At 11, eNB2 sends a PATH SWITCH REQUEST message to a mobility management entity (MME) 510 for the network, which then configures a serving gateway (SGW) 512 to switch S1-U interfaces associated with the UE from eNB1 to eNB2. At 12, the MME sends a PATH SWITCH REQUEST ACK message to eNB2. At this point, eNB2 will start receiving packets for the offloaded bearers from the S-GW and will buffer them. However, the AP is still configured to interwork with eNB1, and any packets received from the UE for the offloaded bearers may be forwarded by the AP to eNB1. At 13, eNB2 sends a UE CONTEXT RELEASE message to eNB1 to complete the LTE handover of the UE. This message will indicate to eNB1 that eNB1 should cancel the interworking with the AP for the UE, and eNB1 will use a MODIFY BEARER OFFLOAD REQUEST message to cancel the offloading of the bearers, as described above with respect to FIG. 9. At this point, the AP will be configured to interwork with eNB2 for the UE, and any data the AP receives from the UE for the offloaded bearers will be forwarded to eNB2. A similar call flow is applicable when the AP is an LTE eNB (which would be a similar system as shown in FIG. 10 with AP1 and AP2 as LTE eNBs).

In the call flow illustrated in FIG. 11, the AP 502 is not logically collocated with either the target eNB2 504b or the source eNB1 504a. If the AP is logically collocated with eNB1, there is no change to the call flow. However, if the AP is logically collocated with eNB2, then steps 9 and 10 will be performed by the processor/controller of collocated AP and eNB2 and the messages of steps 9 and 10 will not be sent via an Xw interface. A similar call flow is applicable when the AP is an eNB and the Xw interface is replaced by an X2 interface.

According to certain aspects, if a radio link failure (RLF) happens, either at the source or the target eNB, the UE may suspend all bearers and reselect a new cell. The new cell may reconfigure the data bearer offloading with the AP by using the operations described herein.

FIG. 12 sets forth example operations 1200 for switching data bearers configured for a UE between base stations of a second radio access technology (RAT) at a base station of a first RAT. An eNodeB or other type of base station/access point may perform the operations 1200, for example. At 1202, the base station of the first RAT may identify a plurality of data bearers configured for a user equipment (UE) served by a first base station of a second RAT. At 1204, the base station of the first RAT may receive from the UE a measurement report identifying a second base station of the second RAT. At 1206, the base station of the first RAT may identify one or more of the data bearers to offload to the second base station of the second RAT based on the measurement report. At 1208, the base station of the first RAT may communicate with the first and second base stations of the second RAT to offload the identified data bearers to the second base station of the second RAT. At 1210, the base station of the first RAT may configure the UE to use the second base station of the second RAT for transmitting and receiving the identified data bearers.

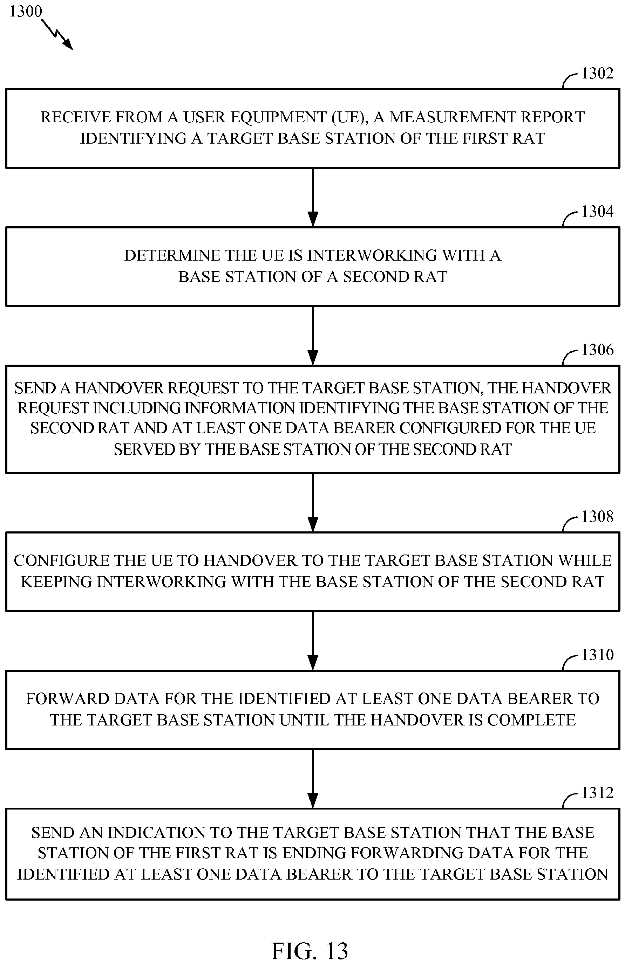

FIG. 13 sets forth example operations 1300 for handing over a UE with data bearers served by a base station of a second radio access technology (RAT) from a base station of a first RAT to a target base station of the first RAT. An eNodeB or other type of base station/access point may perform the operations 1300, for example. At 1302, the base station of the first RAT may receive from a user equipment (UE), a measurement report identifying a target base station of the first RAT. At 1304, the base station of the first RAT may determine the UE is interworking with a base station of a second RAT. At 1306, the base station of the first RAT may send a handover request to the target base station, the handover request including information identifying the base station of the second RAT and at least one data bearer configured for the UE served by the base station of the second RAT. At 1308, the BS of the first RAT may configure the UE to handover to the target base station while keeping interworking with the base station of the second RAT. At 1310, the base station of the first RAT may forward data for the identified at least one data bearer to the target base station until the handover is complete. At 1312, the BS of the first RAT may send an indication to the target base station that the base station of the first RAT is ending forwarding data for the identified at least one data bearer to the target base station.

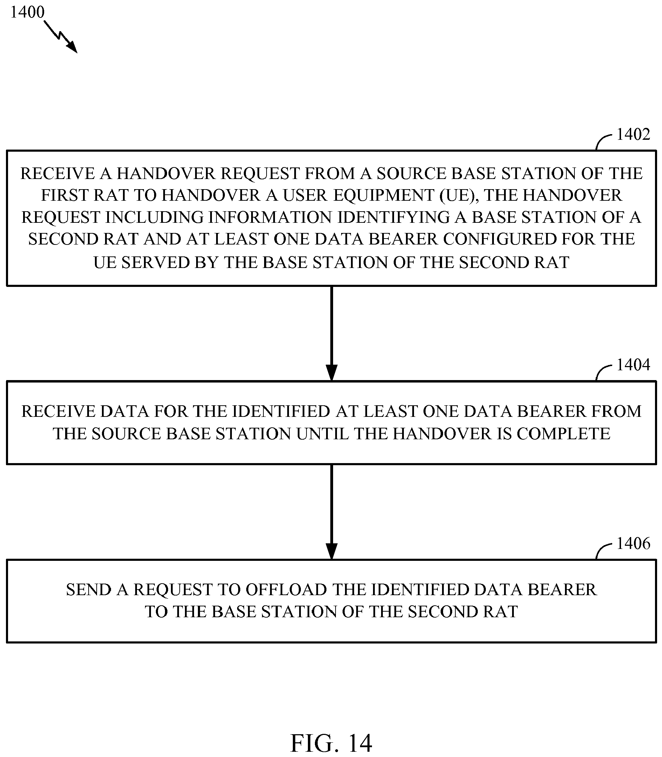

FIG. 14 sets forth example operations 1400 for handing over a UE with data bearers served by a base station of a second radio access technology (RAT) from a source base station of a first RAT to a base station of the first RAT. An eNodeB or other type of base station/access point may perform the operations 1400, for example. At 1402, the base station of the first RAT may receive a handover request from a source base station of the first RAT to handover a user equipment (UE), the handover request including information identifying a base station of a second RAT and at least one data bearer configured for the UE served by the base station of the second RAT. At 1404, the base station of the first RAT may receive data for the identified at least one data bearer from the source base station until the handover is complete. At 1406, the base station may send a request to offload the identified data bearer to the base station of the second RAT.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in Figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: *a*, *b,* or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.
In the following, further embodiments are described to facilitate the understanding of the invention:
1. An apparatus for wireless communications of a first radio access technology (RAT) comprising:
   a processor configured to:
      identify a plurality of data bearers configured for a user equipment (UE) served by a first base station of a second RAT;
      receive from the UE a measurement report identifying a second base station of the second RAT;
      identify one or more of the data bearers to offload to the second base station of the second RAT based on the measurement report;
      communicate with the first and second base stations of the second RAT to offload the identified data bearers to the second base station of the second RAT; and
      configure the UE to use the second base station of the second RAT for transmitting and receiving the identified bearers; and
   a memory coupled with the processor.
2. The apparatus of embodiment 1, wherein communicating with the first base station of the second RAT comprises sending a modify bearer message to the first base station of the second RAT to stop offloading of the identified bearers to the first base station of the second RAT.
3. The apparatus of embodiment 1, wherein communicating with the second base station of the second RAT comprises sending an initial bearer message to offload a set of bearers to the second base station of the second RAT.
4. The apparatus of embodiment 1, wherein the identifying the one or more data bearers to offload comprises identifying one or more data bearers based on load at the first base station of the second RAT, load at the second base station of the second RAT, and received signal quality in the measurement report.
5. The apparatus of embodiment 1, wherein the measurement report indicates the UE is associated with the second base station of the second RAT.
6. The apparatus of embodiment 1, wherein the measurement report indicates the UE is no longer associated with the first base station of the second RAT.
7. The apparatus of embodiment 1, wherein the processor is further configured to:
   receive resource and performance metrics and statistics from the first base station of the second RAT or the second base station of the second RAT through a direct interface.
8. The apparatus of embodiment 7, wherein the resource and performance metrics comprise at least one of:
   hardware load of the apparatus;
   hardware load of the first base station of the second RAT; and
   hardware load of the second base station of the second RAT.
9. The apparatus of embodiment 1, wherein the processor is further configured to:
   use a flow control at the apparatus to reduce underflow and overflow of the receive buffers of the first base station of the second RAT or the second base station of the second RAT.
10. The apparatus of embodiment 9, wherein the processor is further configured to:
   utilize performance metrics and statistics of the second base station of the second RAT for determining the amount of data to be forwarded at any time instance.
11. The apparatus of embodiment 10, wherein determining the amount of data to be forwarded is performed periodically.
12. The apparatus of embodiment 10, wherein determining the amount of data to be forwarded is performed based on receiving an indication from the second base station of the second RAT.
13. The apparatus of embodiment 9, wherein the processor is further configured to:
   utilize performance metrics and statistics of the UE for determining the amount of data to be forwarded at any time instance.
14. The apparatus of embodiment 1, wherein the first RAT and the second RAT comprise the same RAT.
15. An apparatus for wireless communications of a first radio access technology (RAT) comprising:
   a processor configured to:
      receive, from a user equipment (UE), a measurement report identifying a target base station of the first RAT;
      determine the UE is interworking with a base station of a second RAT;
      send a handover request to the target base station, the handover request including information identifying the base station of the second RAT and at least one data bearer configured for the UE served by the base station of the second RAT;
      configure the UE to handover to the target base station while keeping interworking with the base station of the second RAT;
      forward data for the identified at least one data bearer to the target base station until the handover is complete; and
      send an indication to the target base station that the base station is ending forwarding data for the identified at least one data bearer to the target base station; and
   a memory coupled with the processor.
16. The apparatus of embodiment 15, wherein data from the UE for the at least one data bearer is received via the base station of the second RAT.
17. The apparatus of embodiment 15, wherein data to the UE for the at least one data bearer is received from a core network.
18. The apparatus of embodiment 15, wherein the identified at least one data bearer comprises data bearers both from and to the UE configured to be served by the base station of the second RAT.
19. The apparatus of embodiment 16, wherein the first RAT and the second RAT comprise the same RAT.
20. An apparatus for wireless communications of a first radio access technology (RAT) comprising:
   a processor configured to:
      receive a handover request from a source base station of the first RAT to handover a user equipment (UE), the handover request including information identifying a base station of a second RAT and at least one data bearer configured for the UE served by the base station of the second RAT;
      receive data for the identified at least one data bearer from the source base station until the handover is complete; and
      send a request to offload the at least one identified data bearer to the base station of the second RAT; and
   a memory coupled with the processor.
21. The apparatus of embodiment 20, wherein the request to offload is sent after receiving the handover request.
22. The apparatus of embodiment 20, wherein the request to offload is sent after the identified at least one data bearer is switched to the source base station of the first RAT.
23. The apparatus of embodiment 20, wherein the request to offload is sent after a Status Transfer of data packets for the identified at least one data bearer is received from the source base station.
24. The apparatus of embodiment 20, wherein the at least one data bearer comprises data bearers both from and to the UE.
25. The apparatus of embodiment 20, wherein the processor is further configured to:
   forward the received data from the source base station to the base station of the second RAT for data bearers that originate from the core network.
26. The apparatus of embodiment 25, wherein the processor is further configured to:
   stop the forwarding in response to receiving an indication to stop from the core network via the source base station.
27. The apparatus of embodiment 20, wherein the processor is further configured to:
   forward the received data from the source base station to a core network for the identified at least one data bearer which originates from the UE.
28. The apparatus of embodiment 20, wherein the first RAT and the second RAT comprise the same RAT.
29. A method for wireless communications by a base station (BS) of a first radio access technology (RAT) comprising:
   identifying a plurality of data bearers configured for a user equipment (UE) served by a first base station of a second RAT;
   receiving from the UE a measurement report identifying a second base station of the second RAT;
   identifying one or more of the data bearers to offload to the second base station of the second RAT based on the measurement report;
   communicating with the first and second base stations of the second RAT to offload the identified data bearers to the second base station of the second RAT;
   configuring the UE to use the second base station of the second RAT for transmitting and receiving the identified bearers.
30. The method of embodiment 29, wherein the first RAT and the second RAT comprise the same RAT.

## Claims

1. An apparatus for wireless communications of a first radio access technology (RAT) comprising:
a processor configured to:
receive, from a user equipment (UE), a measurement report identifying a target base station of the first RAT;
determine the UE is interworking with a base station of a second RAT;
send a handover request to the target base station, the handover request including information identifying the base station of the second RAT and at least one data bearer configured for the UE served by the base station of the second RAT;
configure the UE to handover to the target base station while keeping interworking with the base station of the second RAT;
forward data for the identified at least one data bearer to the target base station until the handover is complete; and
send an indication to the target base station that the base station is ending forwarding data for the identified at least one data bearer to the target base station; and
a memory coupled with the processor.

2. The apparatus of claim 1, wherein data from the UE for the at least one data bearer is received via the base station of the second RAT.

3. The apparatus of claim 1, wherein data to the UE for the at least one data bearer is received from a core network.

4. The apparatus of claim 1, wherein the identified at least one data bearer comprises data bearers both from and to the UE configured to be served by the base station of the second RAT.

5. The apparatus of claim 2, wherein the first RAT and the second RAT comprise the same RAT.

6. A method for wireless communications performed by a base station (BS) of a first radio access technology (RAT), the method comprising:
receiving from a user equipment (UE), a measurement report identifying a target base station of the first RAT;
determining the UE is interworking with a base station of a second RAT;
sending a handover request to the target base station, the handover request including information identifying the base station of the second RAT and at least one data bearer configured for the UE served by the base station of the second RAT;
configuring the UE to handover to the target base station while keeping interworking with the base station of the second RAT;
forwarding data for the identified at least one data bearer to the target base station until the handover is complete; and
sending an indication to the target base station that the base station is ending forwarding data for the identified at least one data bearer to the target base station.

7. An apparatus for wireless communications of a first radio access technology (RAT) comprising:
a processor configured to:
receive a handover request from a source base station of the first RAT to handover a user equipment (UE), the handover request including information identifying a base station of a second RAT and at least one data bearer configured for the UE served by the base station of the second RAT;
receive data for the identified at least one data bearer from the source base station until the handover is complete; and
send a request to offload the at least one identified data bearer to the base station of the second RAT; and
a memory coupled with the processor.

8. The apparatus of claim 7, wherein the request to offload is sent after receiving the handover request; or
wherein the request to offload is sent after the identified at least one data bearer is switched to the source base station of the first RAT; or
wherein the request to offload is sent after a Status Transfer of data packets for the identified at least one data bearer is received from the source base station.

9. The apparatus of claim 7, wherein the at least one data bearer comprises data bearers both from and to the UE.

10. The apparatus of claim 7, wherein the processor is further configured to:
forward the received data from the source base station to the base station of the second RAT for data bearers that originate from the core network.

11. The apparatus of claim 10, wherein the processor is further configured to:
stop the forwarding in response to receiving an indication to stop from the core network via the source base station.

12. The apparatus of claim 7, wherein the processor is further configured to:
forward the received data from the source base station to a core network for the identified at least one data bearer which originates from the UE.

13. The apparatus of claim 7, wherein the first RAT and the second RAT comprise the same RAT.

14. A method for wireless communications performed by a base station (BS) of a first radio access technology (RAT), the method comprising:
receiving a handover request from a source base station of the first RAT to handover a user equipment (UE), the handover request including information identifying a base station of a second RAT and at least one data bearer configured for the UE served by the base station of the second RAT;
receiving data for the identified at least one data bearer from the source base station until the handover is complete; and
sending a request to offload the at least one identified data bearer to the base station of the second RAT.

15. A computer program comprising instructions for implementing a method in accordance with any of the preceding claims 6 or 14.
